# EUROPÄISCHE PATENTSCHRIFT

(11) **EP 1 703 621 B1**
(45) Veröffentlichungstag und Bekanntmachung des Hinweises auf die Patenterteilung: **12.05.2010**
(21) Anmeldenummer: 05005874.2
(22) Anmeldetag: 17.03.2005
(51) Int. Cl.: H02K 15/02, H02K 1/12

(54) **Verspannung eines Blechpakets**
Pressed laminated stack of metal sheets
Paquet de tôles mises en contrainte

(43) Veröffentlichungstag der Anmeldung: 20.09.2006
(73) Patentinhaber: SIEMENS AKTIENGESELLSCHAFT, 80333 München (DE)
(72) Erfinder: Lehmann, Christoph, Dr., 47506 Neukirchen-Vluyn (DE)

(56) Entgegenhaltungen:
- EP-A- 0 246 430
- WO-A-00/02211
- DE-B- 1 212 622

## Beschreibung

Die Erfindung betrifft einen elektrischen Generator nach dem Oberbegriff des Anspruchs 1 oder 2. Solche Generatoren sind allgemein bekannt.

Ein Generator besteht unter anderem aus elektrisch aktiven Teilen, zu denen ein Ständer und ein drehbar gelagerter Läufer gehören. Der Ständer und der Läufer bestehen aus aufeinander geschichteten Segmentblechen, die auch als Eisenbleche vorliegen können. Die Segmentbleche sind mit Nuten zur Aufnahme von Wicklungen versehen. Eine hohe Magnetisierbarkeit und kleine Hysterese- oder Wirbelstromverluste der Segmentbleche sind von Vorteil. Durch dünne Papier-, Lack- oder Oxidschichten werden die Segmentbleche gegeneinander isoliert. Ein komplett ausgebildeter Stator oder Läufer besteht aus vielen Segmentblechen. Das Gebilde der aufeinander gestapelten Segmentbleche wird auch als Blechpaket bezeichnet.

Die Segmentbleche werden einzeln per Hand oder mit Hilfe von Maschinen aufeinander gestapelt. Die Segmentbleche umfassen Bohrungen, durch die so genannte Spannbolzen geführt werden können. Die Spannbolzen durchziehen das gesamte Blechpaket und ragen in der Regel an einem vorderen und in einem hinteren Teil des Blechpaketes hervor. In vielen Ausführungsformen weist der Spannbolzen an seinen Enden ein Gewinde auf. Durch Anbringen einer Mutter auf das Gewinde wird durch Drehen der Mutter eine Kraft auf das Blechpaket ausgeübt, die dazu führt, dass das Blechpaket fest zusammengepresst wird. Die Mutter wird dann anschließend gesichert, damit sie sich nicht mehr löst.

Im Betrieb der dynamoelektrischen Maschine wirken hohe Kräfte, insbesondere Fliehkräfte. Die einzelnen Bauteile der elektrischen Maschine werden stark beansprucht. Insbesondere werden die Spannbolzen stark beansprucht. Unter besonderen Betriebsbedingungen kann es hierbei vorkommen, dass einzelne Spannbolzen während des Betriebes brechen.

In der Regel können gerissene Spannbolzen, die Jahre lang im Betrieb waren, nur nach einem Ausbau der Ständerwicklung gezogen, entfernt und ausgetauscht werden.

Gerissene Spannbolzen werden durch neue Spannbolzen ersetzt. Dafür ist es erforderlich, dass die Ständerwicklung komplett abgebaut werden muss. Der Abbau der Ständerwicklung ist zeitaufwendig und mit Kosten verbunden.

Aus der WO 00/02211 ist ein elektrischer Transformator mit einem als Blechpaket ausgebildeten Transformatorkern bekannt. Ausserhalb des Blechpakets sind Zugseile vorgesehen, mit denen der Transformatorkern verspannt ist.

Aufgabe der Erfindung ist es, den Abbau der Ständerwicklung zu vereinfachen.

Die Aufgabe wird gelöst mit einem elektrischen Generator nach Anspruch 1 oder Anspruch 2.

Durch eine Anordnung zur Verspannung eines Blechpaketes einer elektrischen Maschine, deren Blechpaket aus einzelnen Segmentblechen aufgebaut ist, wobei im Blechpaket ein biegsames Spannmittel zum Zusammenpressen des Blechpaketes angeordnet ist.

Die Erfindung geht davon aus, dass ein biegsames Spannmittel angeordnet wird, so dass das Spannmittel beim Ausbau z.B. auf eine Rolle aufgerollt werden kann. Das Spannmittel kann genau so gut einfach zur Seite gelenkt werden. Ein Umlenken des Spannmittels führt zu dem Vorteil, dass zum einen wenig Raum benötigt wird und zum anderen die Ständerwicklung nicht abgebaut werden muss.

Die Erfindung geht davon aus, dass bei herkömmlichen Spannbolzen als Ausführungsform eines Spannmittels, die in der Regel starr und nicht biegsam ausgebildet sind, beim Ausbau der Spannbolzen verhältnismäßig viel Raum hinter der elektrischen Maschine benötigt wird. Eine elektrische Maschine kann unter Umständen mehrere Meter lang sein, so dass zum Ausbau des Spannbolzens der Raum hinter der elektrischen Maschine genau so mehrere Meter groß sein muss. Durch ein biegsames Spannmittel kann der Raum hinter der elektrischen Maschine kleiner sein.

Die Erfindung geht weiterhin davon aus, dass durch das biegsame Spannmittel die Ständerwicklung nicht ausgebaut werden muss, was bei herkömmlichen Spannbolzen der Fall ist. Man gewinnt dadurch den Vorteil, dass ein Auswechseln des Spannmittels schnell durchgeführt werden kann.

Gemäss der Erfindung ist dazu das biegsame Spannmittel als Seil oder als Kette ausgebildet.

Die Erfindung geht davon aus, dass ein als Seil, insbesondere Drahtseil oder als Kette ausgebildetes Spannmittel erstens verhältnismäßig biegsam ist und zweitens eine hohe Zugfestigkeit aufweist.

In einer Weiterbildung der Erfindung wird um das Spannmittel eine Isolationshülse zur elektrischen Isolation angeordnet.

Es ist bekannt, dass in elektrischen Maschinen, insbesondere bei elektrischen Maschinen hoher Leistungszahl, derart hohe Ströme auftreten können, dass ein nicht isolierter Spannbolzen zu Schäden führen könnte.

Die Erfindung geht davon aus, dass durch eine Isolationshülse um das Spannmittel eine elektrische Isolation derart erfolgt, dass weitestgehend Schäden vermieden werden.

Dadurch ist das Spannmittel derart ausgebildet, dass es zum Einsatz in einem elektrischen Generator geeignet ist.

Gerade in elektrischen Generatoren, insbesondere in elektrischen Generatoren mit hohen Leistungszahlen, werden viele Maßnahmen unternommen zur Sicherung der Segmentbleche bzw. des Blechpaktes. Gerade für Energieversorgungsunternehmen ist es von Vorteil, wenn der Austausch eines Spannmittels sehr schnell erfolgen kann.

Ausführungsbeispiele der Erfindung werden nachfolgend unter Bezugnahme auf die Zeichnungen näher beschrieben. Dabei haben mit denselben Bezugszeichen versehene Komponenten die gleiche Funktionsweise.

Dabei zeigen:
- Figur 1: eine perspektivische Darstellung eines Ständerblechpaktes,
- Figur 2: eine Draufsicht auf ein einzelnes Segmentblech,
- Figur 3: eine Schnittansicht durch eine elektrische Maschine,
- Figur 4: eine vergrößerte Darstellung des Ausschnittes A aus Figur 3,
- Figur 5: eine alternative Darstellung des Ausschnittes A aus Figur 3.

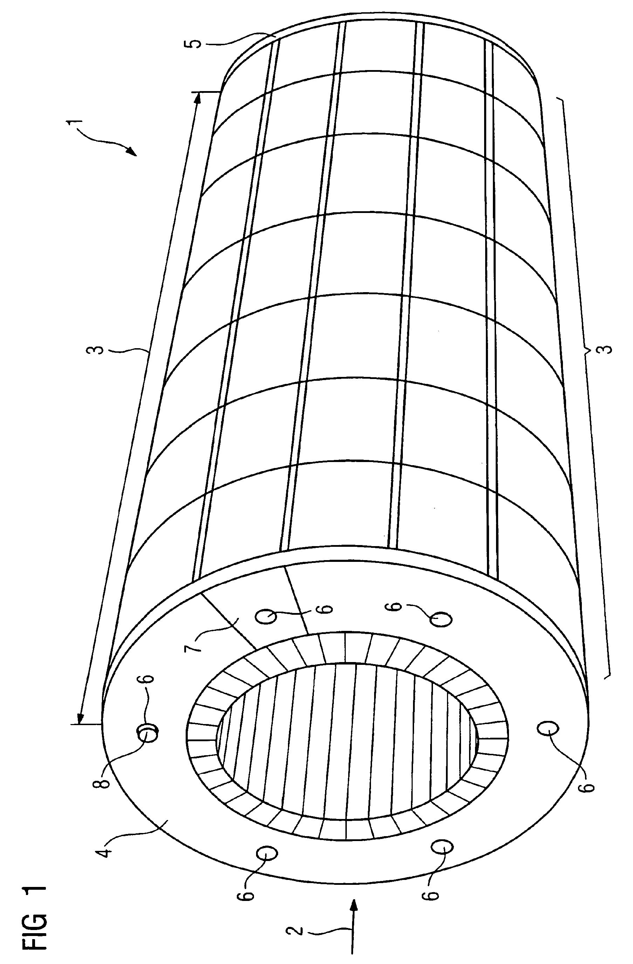

In Figur 1 ist eine perspektivische Darstellung eines Ständerblechpaktes 1 einer elektrischen Maschine dargestellt. Der Übersichtlichkeit wegen ist der Rotor, die Erregerstromzuführung usw. nicht dargestellt. Das Blechpaket 1 umfasst mehrere in Figur 1 nicht näher dargestellte Segmentbleche 7. Die Segmentbleche 7 sind derart angeordnet, dass sie in einer Rotationsrichtung 2 rotationssymmetrisch auf einer Länge 3 angeordnet sind. In der Regel wird das Blechpaket 1 durch zwei Druckplatten 4, 5 gehalten. Die Druckplatten 4, 5 weisen mehrere Bohrungen 6 zur Aufnahme von Spannmitteln auf. Die Druckplatte 4 in Figur 1 zeigt beispielsweise sechs Bohrungen auf. Beispielhaft ist ein Segmentblech 7 in Figur 1 dargestellt. In diese Bohrungen 6, die geradlinig durch das gesamte Blechpaket 1 führen, ist jeweils ein biegsames Spannmittel 8 angeordnet. Das biegsame Spannmittel 8 wird an ihren Enden durch geeignete Mittel festgehalten. Geeignete Mittel sind hierbei eine kurze Gewindeführung mit einer Mutter oder eine Verschweißung mit der Druckplatte 4, 5.

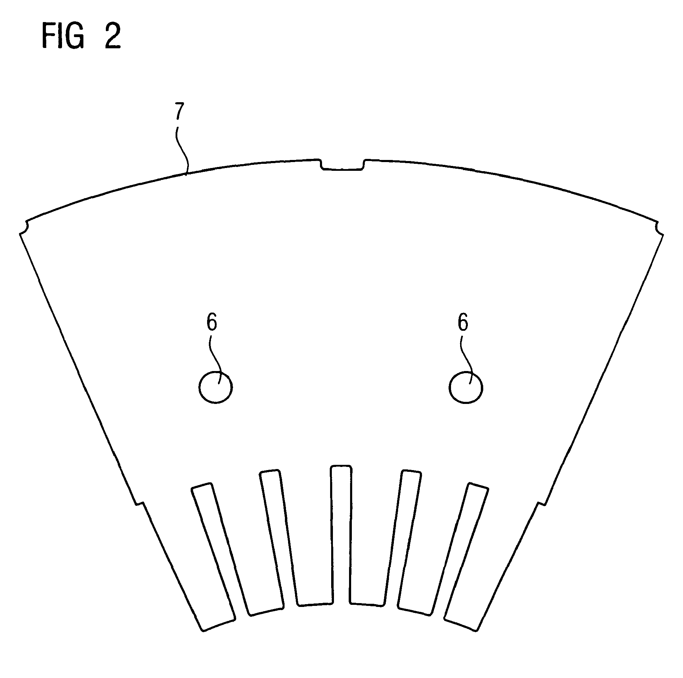

In Figur 2 ist eine Draufsicht auf ein Segmentblech 7 dargestellt. Ein Generator kann bis zu 150.000 Segmentbleche 7 umfassen. Durch die Bohrungen 6 wird das biegsame Spannmittel 8 angeordnet. Durch das biegsame Spannmittel 8 wird das Blechpaket 1 zusammengepresst.

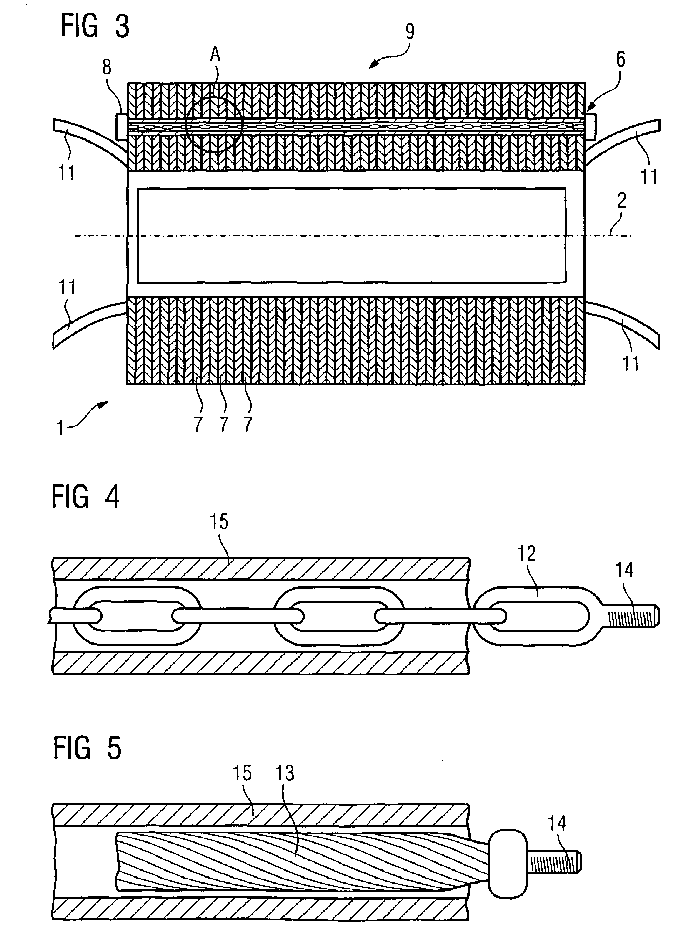

In Figur 3 ist eine Schnittansicht durch einen elektrischen Generator 9 dargestellt. Exemplarisch sind in dieser Darstellung lediglich drei Segmentbleche 7 mit einem Bezugszeichen versehen. Das Blechpaket 1 wird mit einem Spannmittel 8 zusammengepresst. Beim Ausbau des biegsamen Spannmittels 8 muss die Ständerwicklung 11 in der Regel nicht abgebaut werden. Das Spannmittel 8 kann entweder aus einer Kette 12 oder einem Seil 13 bestehen. An den Enden der Kette 12 oder des Seiles 13 ist ein Gewindebolzen 14 angeordnet.

Das Seil 13 oder die Kette 12 kann aus hochfesten Metall-Werkstoffen oder auch aus Kohlefaserwerkstoffen ausgebildet sein.

In der Figur 4 ist ein vergrößerter Ausschnitt des Bereiches A aus Figur 3 dargestellt. In dieser Figurendarstellung ist eine Isolationshülse 15 zur elektrischen Isolation dargestellt. Die Isolationshülse 15 kann auch als Isolations-Schlauch ausgebildet sein.

## Patentansprüche

1. Elektrischer Generator,
umfassend ein aus einzelnen Segmentblechen (7) ausgebildetes Blechpaket (1),
**dadurch gekennzeichnet, dass**
im Blechpaket ein Seil (13) als Spannmittel (8) zum Zusammenpressen des Blechpakets (1) angeordnet ist.

2. Elektrischer Generator,
umfassend ein aus einzelnen Segmentblechen (7) ausgebildetes Blechpaket (1),
**dadurch gekennzeichnet, dass**
im Blechpaket (1) eine Kette (12) als Spannmittel (8) zum Zusammenpressen des Blechpakets (1) angeordnet ist.

3. Elektrischer Generator nach Anspruch 1 oder 2,
**dadurch gekennzeichnet, dass**
um das Spannmittel (8) eine Isolationshülse (15) zur elektrischen Isolation angeordnet ist.

## Claims

1. Electrical generator,
having a laminated core (1) which is formed from individual segment laminates (7),
**characterized in that**
a cable (13) is arranged in the laminated core, as a tensioning means (8) for compression of the laminated core (1).

2. Electrical generator,
having a laminated core (1) which is formed from individual segment laminates (7),
**characterized in that**
a chain (12) is arranged in the laminated core (1), as a tensioning means (8) for compression of the laminated core (1).

3. Electrical generator according to Claim 1 or 2,
**characterized in that**
an insulation sleeve (15) for electrical insulation is arranged around the tensioning means (8).

## Revendications

1. Générateur électrique comprenant :
un paquet ( 1 ) de tôles constitué de tôles ( 7 ) individuelles en segment,
**caractérisé en ce que**
dans le paquet de tôles est disposé un câble ( 13) comme moyen ( 8 ) de serrage pour comprimer ensemble le paquet ( 1 ) de tôles.

2. Générateur électrique comprenant :
un paquet ( 1 ) de tôles constitué de tôles ( 7 ) individuelles en segment,
**caractérisé en ce que**
dans le paquet de tôles est disposé une chaîne ( 12 ) comme moyen ( 8 ) de serrage pour comprimer ensemble le paquet ( 1 ) de tôles.

3. Générateur électrique suivant la revendication 1 ou 2,
**caractérisé en ce qu'**un manchon ( 15 ) isolant est disposé pour l'isolation électrique autour du moyen ( 8 ) de serrage.
